(19) Europäisches Patentamt
European Patent Office
Office européen des brevets

(11) EP 0 742 857 B1

(12) **EUROPÄISCHE PATENTSCHRIFT**

(45) Veröffentlichungstag und Bekanntmachung des Hinweises auf die Patenterteilung:
**15.07.1998 Patentblatt 1998/29**

(51) Int Cl.6: **D21H 17/34**, D21H 19/20, D21H 19/58, C09J 151/00, C08F 265/04, C08F 265/06

(21) Anmeldenummer: **95907581.3**

(22) Anmeldetag: **23.01.1995**

(86) Internationale Anmeldenummer:
**PCT/EP95/00224**

(87) Internationale Veröffentlichungsnummer:
**WO 95/21294 (10.08.1995 Gazette 1995/34)**

(54) **VERWENDUNG VON MIT BESTIMMTEN PAPIERSTREICHMASSEN GESTRICHENEN PAPIEREN IM OFFSETDRUCK**

USE OF PAPERS COATED WITH SPECIFIC BINDER MIXTURES IN OFFSET PRINTING

UTILISATION DE PAPIERS ENDUITS DE MASSES DE COUCHAGE SPECIFIQUES POUR L'IMPRESSION OFFSET

(84) Benannte Vertragsstaaten:
**AT BE CH DE FR GB IT LI NL SE**

(30) Priorität: **04.02.1994 DE 4403480**

(43) Veröffentlichungstag der Anmeldung:
**20.11.1996 Patentblatt 1996/47**

(73) Patentinhaber: **BASF AKTIENGESELLSCHAFT**
**67056 Ludwigshafen (DE)**

(72) Erfinder:
- **LEUBE, Hartmann, F.**
  **D-67061 Ludwigshafen (DE)**
- **WIRTH, Thomas**
  **D-67061 Ludwigshafen (DE)**
- **LAWRENZ, Dirk**
  **D-67133 Maxdorf (DE)**

(56) Entgegenhaltungen:
**EP-A- 0 002 813**
**EP-A- 0 437 623**
**EP-A- 0 624 607**
**JP-A- 2 169 800**
**JP-A-57 191 392**

- **DATABASE WPIL,n 93-088677,Derwent Publications Ltd,London,GB; & JP-A-5032710(ASAHI CHEMICAL)09-02-93 *The entire abstract***
- **DATABASE WPIL,n 93-088678,Derwent Publications Ltd,London,GB; & JP-A-5032711(ASAHI CHEMICAL)09-02-93 *the entire abstract***

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von mit Papierstreichmassen beschichteten Papieren im Offsetdruck.

Beim Offsetdruck auf gestrichenen Papieren tritt häufig ein für dieses Druckverfahren spezifisches Problem der Druckungleichmäßigkeit auf, welches in Fachkreisen als "Mottling" bezeichnet wird. Es gehört bis heute zu den ungelösten Problemen auf diesem Gebiet und beschäftigt in gleicher Weise Papierhersteller und Drucker. Bei diesem Phänomen handelt es sich um einen Effekt, der speziell beim Mehrfarbenoffsetdruck in den sogenannten Halbtönen vorkommt und als eine Art Wolkigkeit im Farbeindruck erscheint. Die Ungleichmäßigkeit in der Druckwiedergabe kommt ganz offensichtlich dadurch zustande, daß auf dem Papier die Druckfarbe an manchen Stellen besser, an deren Stellen weniger gut angenommen wird.

Die Ursachen dieser ungleichmäßigen Farbannahme sind bis heute nicht eindeutig geklärt.

Gründe dafür, weshalb trotz intensiver Bemühungen bisher kein besseres Verständnis für dieses Phänomen erarbeitet wurde, sind einerseits sicher im komplizierten Verfahren des Offsetdruck, andererseits in dem nicht minder komplizierten Aufbau des Bedruckstoffs Papier zu suchen.

Neben der Optimierung der Eigenschaften sowohl des Papiers als auch der Druckfarbe, müssen diese Komponenten sowohl aufeinander abgestimmt als auch dem Verfahren des Offsetdrucks angepaßt sein.

Was den Blickwinkel des Papierherstellers betrifft, so haben für den Fall der gestrichenen Papiere nicht nur verfahrenstechnische Parameter beim Streichvorgang des Papiers einen großen Einfluß, sondern hier spielen auch die physikalisch-chemischen Eigenschaften der Strichkomponenten eine entscheidende Rolle. Insbesondere den in den Streichfarben verwendeten Bindemitteln kommt eine besondere Bedeutung zu.

Als Bindemittel für Papierstreichmassen finden neben Naturprodukten wie Stärke vorwiegend Polymerdispersionen auf Basis von Styrol und Butadien bzw. Styrol und Acrylestern Verwendung.

Es ist bekannt, daß bei Verwendung von Bindemitteln auf Basis von Butadien-(Co-)Polymeren wie z.B. Styrol-Butadien-Copolymeren für gestrichene Offsetpapiere im Vergleich zu Acrylat-(Co-)Polymeren wie z.B. Styrol-Acrylat-Copolymeren eine deutlich höhere Neigung zum Mottling besteht.

Es ist auch bekannt, Dispersion auf Basis von Styrol/Butadien mit Acrylester-Dispersionen abzumischen.

In der japanischen Offenlegungsschrift JP-A-2-169 800 werden Latexmischungen für die Papierbeschichtung aus Butadiencopolymeren und Acrylatcopolymeren beschrieben, die im Papierstrich eine homogene Druckfarbenannahme bewirken sollen. Die Latexmischungen enthalten Acrylatcopolymere mit einem Alkylacrylatanteil von 20 bis 50 Gew.-% und einer Mindestfilmbildetemperatur im Bereich von 35 bis 80°C.

Aus der JP-A-57-191 392 sind Polymermischungen für die Papierbeschichtung bekannt, die aus einem Butadiencopolymerisat und einem Acrylnitrilcopolymerisat bestehen und dem beschichteten Papier einen hohen Druckglanz verliehen.

Weiterhin sind aus der EP-A-099 792 wäßrige Polymerdispersionen, enthaltend eine Mischung aus Butadien/Styrolcopolymeren und Acrylsäureestern mit $C_1$-$C_8$-Alkanolen, sowie deren Verwendung in Klebstoffen bekannt.

Aus JP-A-2-169 800 und JP-A-57-191 392 sind Papierstreichmassen für Offsetdruckpapier bekannt, welche Mischungen aus einem Acrylatpolymeren und einem Butadienpolymeren enthalten. Die Glasübergangstemperaturen (Tg) der Acrylatpolymeren liegen weit oberhalb 0°C. Die mit -10°C angegebene Tg in Vergleichsbeispiel 7 der JP-A-57-191 392 ist offensichtlich zu niedrig und muß oberhalb 0°C liegen, wie an der Monomerzusammensetzung zu erkennen ist.

JP-A-5-032 710 und JP-A-5-032 711 beschreiben Papierstreichmassen, welche in Saatfahrweise aus einer Acrylatsaat und einer Butadienkomponenten hergestellt wurden. Auch hier liegt die Tg der Acrylatsaat deutlich oberhalb 0°C.

Aus der nach veröffentlichten WO-A-95/11342 (Prioritätsdatum 19.10.93, Anmeldedatum 22.06.94, Publikationsdatum 27.04.95) ist die Verwendung von Bindemittelmischungen, enthaltend 1 bis 49 Gew.-% eines Polymerisats aus (Meth)acrylsäureestern und 51 bis 99 Gew.-% eines Polymerisats auf Basis von Butadien/Styrol in Papierstreichmassen bekannt.

In der unveröffentlichten Deutschen Patentanmeldung P 4315881 (entspricht der EP-A-624 607, Prioritätsdatum 12.05.93, Anmeldedatum 02.05.94, Publikationsdatum 17.11.94) sind Stufenpolymerisate aus (Meth)acrylsäureestern (1. Stufe) und Styrol/Butadien (2. Stufe) bekannt.

Ein Zusetzen der Polymersaat während der Polymerisation der Styrol und Butadien monomeren ist nicht offenbart.

Aufgabe der vorliegenden Erfindung war es, für Papierstreichmassen geeignete Bindemittel zu finden, welche bei einem insgesamt guten Eigenschaftsprofil besonders beim Offset-Druck eine verbesserte gleichmäßige Bedruckbarkeit ermöglichen, also eine möglichst geringe Mottling-Neigung aufweisen.

Demgemäß ist der Gegenstand der Erfindung die in Anspruch 1 definierte Verwendung.

Als Polymersaat (A) kommen Polymerisate in Betracht, welche berechnete (nach Fox) Glasübergangstemperaturen Tg im Bereich von -80 bis 0°C, vorzugsweise -60 bis 0°C, besonders bevorzugt -50 bis -15°C aufweisen.

Die Glasübergangstemperatur kann nach Fox berechnet werden (T.G. Fox, Bull. Am. Phys. Soc. (Ser. II) 1, 123 [1956]). Danach gilt für die Glasübergangstemperatur von Mischpolymerisaten in guter Näherung:

$$\frac{1}{Tg} = \frac{X^1}{Tg^1} + \frac{X^2}{Tg^2} + ..... + \frac{X^n}{Tg^n}$$

mit

$X^1$, $X^2$ ... $X^n$ = Massenbrüche der Monomeren 1, 2, ... n
$Tg^1$, $Tg^2$ ... $Tg^n$ = Glasübergangstemperaturen der Monomeren 1, 2 ... n in Grad Kelvin.

Die Tg der Monomeren sind z.B. in "J. Brandrup, E.H. Immergut, Polymer Handbook, Ist Ed., J. Wiley & Sons, New York 1966" aufgeführt.

Bei der Polymersaat (A) handelt es sich um ein Polymerisat auf Basis von Estern der Acrylsäure oder Methacrylsäure, insbesondere mit $C_4$- bis $C_{12}$-Alkanolen, z.B. n-Butanol, 2-Ethylhexanol, iso-Butanol, tert.-Butanol, n-Pentanol, Isoamylalkohol, n-Hexanol, Cyclohexanol, Octanol oder Laurylalkohol.

Vorteilhafterweise verwendet man eine Polymersaat (A) aus

($a_1$) 50 bis 100 Gew.-%, bevorzugt 50 bis 99 Gew.-%, besonders bevorzugt 80 bis 99 Gew.-% der oben genannten $C_4$-$C_{12}$-Alkylester der Acrylsäure und/oder der Methacrylsäure,

($a_2$) 0 bis 50 Gew.-% eines Vinylaromaten mit bis zu 20 C-Atomen, bevorzugt 0 bis 35 Gew.-%, besonders bevorzugt 0 bis 20 Gew.-%, von Vinylaromaten wie α-Methylstyrol, p-Methylstyrol, Vinyltoluol oder insbesondere Styrol.

($a_3$) 0 bis 15 Gew.-%, bevorzugt 1 bis 5 Gew.-% an weiteren olefinisch ungesättigten Monomeren.

Bevorzugt als ($a_3$) in Betracht kommen eine oder mehrere ungesättigte Carbonsäuren und/oder deren Amide und/oder Anhydride, wie beispielsweise Acrylsäure, Acrylamid, Methacrylsäure, Methacrylamid oder Itaconsäure, Maleinsäure, Fumarsäure, Vinylsulfonsäure, Vinylphosphonsäuren oder Acrylamidopropansulfonsäure und deren wasserlösliche Salze.

Als Monomere ($a_3$) kommen weiterhin in Betracht radikalisch polymerisierbare Monomere wie Olefine, z.B. Ethylen, Vinyl- und Vinylidenhalogen wie Vinyl- und Vinylidenchlorid, Ester von Vinylalkoholen und 1 bis 18 C-Atome aufweisenden Monocarbonsäuren wie Vinylacetat, Vinylpropionat, Vinyl-n-butyrat, Vinyllaurat und Vinylstearat, Ester von α, β-monoethylenisch ungesättigten Dicarbonsäuren wie Maleinsäure, Fumarsäure und Itaconsäure, mit im allgemeinen 1 bis 12, vorzugsweise 1 bis 9 und insbesondere 1 bis 4 C-Atomen aufweisenden Alkanolen wie Maleinsäuredimethylester oder Maleinsäure-n-butylester. Genannt seien auch basische Monomere wie

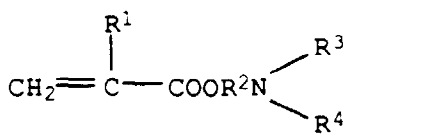

(a),

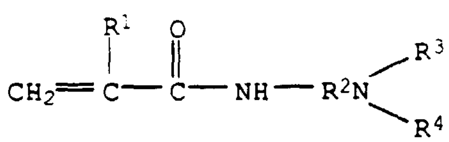

(b),

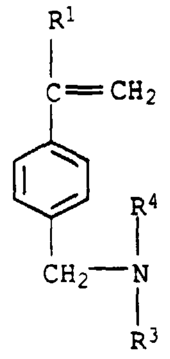

(c)

und

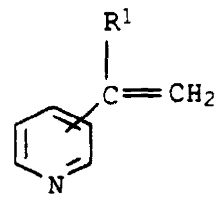

(d),

in denen

R[1] für H oder $CH_3$ steht,
R[2] für eine Alkylengruppe mit 1 bis 4 Kohlenstoffatomen und
R[3] und R[4] für H oder Alkylgruppen mit 1 bis 4 Kohlenstoffatomen stehen,

oder andere basische Zentren enthaltende radikalisch polymerisierbare Monomere, welche auch in N-protonierter oder N-alkylierter Form vorliegen können wie z.B. die Verbindung Diallyldimethylammoniumchlorid.

Außerdem können vernetzend wirkende Monomere, in A) vorhanden sein. Als derartige Monomere sind zu nennen $C_{4-8}$-konjugierte Diene wie 1,3-Butadien und Isopren, sowie radikalisch polymerisierbare Monomere mit mindestens einer Epoxy-, Hydroxy-, N-Alkylol-, N-Alkoxy-, Carbonylgruppe, Amidingruppe oder wenigstens zwei nicht konjugierten ethylenisch ungesättigten Doppelbindungen. Selbstverständlich ist auch eine Kombination derartiger Verbindungen möglich. Beispiele für epoxygruppenhaltige Monomere wären Glycidylacrylat, Glycidylmethacrylat und Vinylglycidylether.

Bevorzugte N-Alkylolverbindungen sind die N-Alkylolamide von ethylenisch ungesättigten Carbonsäuren mit 1 bis 4 C-Atome im Alkylrest wie N-Methylolacrylamid, N-Ethanolacrylamid, N-Propanolacrylamid, N-Methylolmethacrylamid, N-Ethanolmethacrylamid, N-Methylolmaleinimid, N-Methylolmaleinamid und N-Methylol-p-Vinylbenzamid.

Geeignete N-Alkoxymethylacrylate und -methacrylate sind in erster Linie Verbindungen mit 1 bis 8 C-Atomen im Alkoxyrest wie N-(Methoxymethyl)acrylamid, N-(Butoxymethyl)acrylamid, N-(Methoxymethyl)methacrylamid und N-(Butoxymethyl)methacrylamid und Methylolallylcarbamate, deren Methylolgruppen durch $C_1$-$C_8$-Alkyl verethert sein

können. Als carbonylgruppenhaltige Monomere sind bevorzugt Acrolein, Diacetonacrylamid, Formylstyrol, Vinylalkylketone und (Meth)acryloxyalkylpropanale gemäß EP 00 03 516, Diacetonacrylat, Acetonylacrylat, Diaceton(meth) acrylat, 2-Hydroxypropylacrylatacetylacetat und Butandiol-1,4-acrylatacetylacetat zu nennen.

Als aziridingruppenhaltiges Monomeres sei 2-(1-Aziridinyl)ethylmethacrylat genannt.

Als Vernetzungskomponenten mit mindestens zwei Acryl-, Methacryl, Alkyl- oder Vinylgruppen oder entsprechende Kombinationen sind zu nennen Alkylenglykoldi(meth)acrylate wie Ethylenglykoldiacrylat, 1,3-Butylenglykoldiacrylat, Propylenglykoldiacrylat und Triethylenglykoldimethacrylat, 1,3-Glycerindimethylacrylat, 1,1,1-Trimethylolpropandimethacrylat, 1,1,1-Trimethylolethandiacrylat, Pentaerythritoltrimethacrylat, Sorbitanpentamethacrylat, Methylenbisacrylamid und -methacrylamid, Divinylbenzol, Vinylmethacrylat, Vinylcrotonat, Vinylacrylat und Divinyladipat, Diallylphthalat, Allylmethacrylat, Allylacrylat, Diallylmaleat, Diallylitakonat, Diallylmalonat, Diallylcarbonat, Triallylcitrat, Divinylether, Ethylenglykoldivinylether und Cyclopentadienylacrylat bzw. -methacrylat.

Weitere geeignete Monomere sind solche mit $SiR^1R^2R^3$-Gruppen, in denen $R^1$, $R^2$ und $R^3$ unabhängig voneinander $C_1$-$C_4$-Alkyl- oder Alkoxygruppen wie Methyl-, Ethyl-, Methoxy- und Ethoxy- bedeuten, wie beispielsweise Vinyltrialkoxysilane, Acryloxysilane wie z.B. $\gamma$-Methacryloxypropyltrimethoxysilan und Methacryloxyethyltrimethylsilan.

Zusätzlich zur Verwendung solcher vernetzender Monomere kann unter bestimmten Umständen die innere Festigkeit der Polymerfilme durch Zugabe von Metallsalzen wie z.B. Ca-, Mg-, Zn-Salze nach erfolgter Polymerisation erhöht werden, sofern sie zur Bindung mit diesen Salzen befähigte Gruppen wie beispielsweise Carboxylgruppen enthalten; darüber hinaus ist die Zugabe von Hydrazinderivaten, Aminooxyalkanen, sowie von Kondensationsprodukten auf der Basis Formaldehyd, Melamin, Phenol und/oder Harnstoff nach erfolgter Polymerisation möglich.

Acrylnitril oder Methacrylnitril, soweit vorhanden, ist vorzugsweise in Mengen von weniger als 5 Gew.-%, bevorzugt weniger als 2 Gew.-% in der Polymersaat (A) enthalten.

In einer bevorzugten Ausführungsform verwendet man Polymerisate A), die in Gegenwart einer molekulargewichtsregelnden Substanz wie beispielsweise tert.-Dodecylmercaptan, Tetrachlorkohlenstoff, Tetrabromkohlenstoff, Trichlorbrommethan, Butylmercaptan, Allylalkohol, Poly-THF-bis-thiol, Mercaptoethanol, Acetylaceton, Thioglykolsäure oder Thioglykolsäureester hergestellt wurden. Vorzugsweise werden derartige Substanzen im Gemisch mit den zu polymerisierenden Monomeren dem Reaktionsgemisch zugegeben.

Vorzugsweise wird die Polymersaat durch Emulsionspolymerisation hergestellt. Man erhält dabei eine wäßrige Dispersion von dispergierten Polyteilchen. Die Teilchengröße kann durch einfache Maßnahmen, wie Variation der Emulgatormenge oder der Rührerleistung in der gewünschten Größe eingestellt werden.

Geeignete Dispersionen weisen in der Regel zahlenmittlere Teilchengrößen im Bereich von 10-1000 nm auf, insbesondere 20-500 nm, besonders bevorzugt 50 bis 200 nm, ganz besonders bevorzugt 70 bis 150 nm. Es können auch bimodale und multimodale Teilchengrößenverteilungen von Vorteil sein. Die Saatdispersionen können ihrerseits unter Verwendung einer geeigneten, feinteiligeren Saatdispersion hergestellt worden sein.

Ethylenisch ungesättigten Monomere B) enthalten 10 bis 100 Gew.-% Butadien, insbesondere 20 bis 80, besonders bevorzugt 20 bis 50, sowie 0 bis 90, insbesondere 20 bis 80, besonders bevorzugt 50 bis 80 Gew.-% Styrol oder die obengenannten Vinylaromaten sowie 0 bis 10 Gew.-% einfach oder mehrfach ungesättigte Carbonsäuren und/oder deren Amiden und/oder deren Anhydriden, beispielsweise Acrylsäure, Methacrylsäure, Itaconsäure oder (Meth)acrylamid.

Darüber hinaus kann die Komponente (B) 0 bis 10 Gew.-% weiterer Comonomere enthalten, bevorzugt Acrylnitril und/oder Methacrylnitril und/oder Ester der (Meth)acrylsäure mit $C_1$-$C_{12}$-Alkanolen.

Zur Herstellung der Polymerisate (B) können molekulargewichtsregelnde Substanzen in Mengen von 0 bis 5 Gew.-%, bezogen auf die eingesetzte Monomerenmenge, verwendet werden. Geeignete Substanzen sind im Rahmen der Herstellung der Komponenten (A) genannt.

Die Polymerisation der Monomeren B) kann durch Emulsionspolymerisation unter Verwendung üblicher radikalischer Polymerisationsinitiatoren durchgeführt werden.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, Dibenzoylperoxid, $\gamma$-Butylperpivalat, t-Butylper-2-ethylhexanoat, 2,5-Dimethyl-2,5-di(t-butylperoxy)hexan, Cumolhydroperoxid, als auch um Azoverbindungen wie beispielsweise Azobisisobutyronitril, 2,2'-Azobis(2-amidinopropan)dihydrochlorid, handeln.

Geeignet sind auch kombinierte Systeme, die aus wenigstens einem organischen Reduktionsmittel und wenigstens einem Peroxid und/ oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/ Wasserstoffperoxid, wobei anstelle von Ascorbinsäure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxodisulfate und/oder Ammoniumperoxodisulfate angewendet werden. In der Regel

beträgt die Menge der eingesetzten radikalischen Initiatorsysteme, bezogen auf die Gesamtmenge der zu polymerisierenden Monomeren 0,1 bis 3 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Die Art und Weise, in der das radikalische Initiatorsystem im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Im Falle der Emulsionspolymerisation können üblicherweise bekannte ionische und/oder nichtionische Emulgatoren und/oder Schutzkolloide bzw. Stabilisatoren verwendet werden.

Als derartige grenzflächenaktive Substanzen kommen prinzipiell die als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren relative Molekulargewichte im Unterschied zu den Schutzkolloiden üblicherweise unter 2000 liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest; $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$).

Weitere geeignete Dispergiermittel sind Verbindungen der allgemeinen Formel II

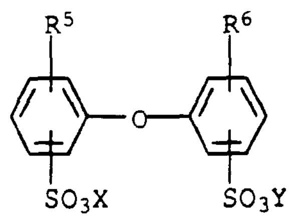

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208.

Die Dispersionen können auch unter Verwendung eines Schutzkolloids zusätzlich zu vorhandenem Emulgator oder unter Verzicht auf Emulgator, hergestellt werden, wobei die Menge des Schutzkolloids bis zu 100 Gew.-%, bevorzugt 0,5 bis 30 Gew.-%, bezogen auf die Menge der eingesetzten Monomere betragen kann.

Verfahrenstechnisch kann dieses Schutzkolloid vollständig oder zum Teil, zeitgleich oder zeitversetzt, mit den Monomeren gemeinsam oder getrennt, zugegeben werden; dabei kann es von Vorteil sein, bis zu 30 Gew.-%, vorzugsweise bis zu 10 Gew.-%, bezogen auf Monomere, Schutzkolloid in wäßriger Lösung vorzulegen.

Als natürliche Schutzkolloide seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Geeignete synthetische Schutzkolloide schließen Polyacrylsäure und deren Salze, Polyacrylamide, wasserlösliche Acrylsäurecopolymere, wasserlösliche Acrylamidcopolymere, Polyvinylpyrrolidone, Polyvinylalkohole und teilverseifte Polyvinylalkohole ein.

Hierbei kann es von Vorteil sein, wenn ein Teil des Schutzkolloids auf das Polymer aufgepfropft wird.

Die Emulsionspolymerisation erfolgt in der Regel bei 30 bis 95, vorzugsweise 75 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Selbstverständlich kann die radikalische wäßrige Emulsionspolymerisation auch unter erhöhtem oder reduziertem Druck erfolgen.

Die Polymersaat A), vorzugsweise in Form ihrer wäßrigen Dispersion wird während der Emulsionspolymerisation zugegeben ("Nachschuß"). Wird die Saat im Nachschuß eingesetzt, so kann die Zugabe zu dem Zeitpunkt erfolgen, zu dem die wachsenden Teilchen bei der Polymerisation von B) den mittleren Teilchendurchmesser der Polymersaatteilchen erreicht haben. Dann ist eine monomodale Teilchengrößenverteilung der resultierenden Dispersion am Ende der Polymerisation das Ergebnis. Die Zugabe kann aber auch zu einem beliebigen anderen Zeitpunkt erfolgen. Das Ergebnis ist dann eine bimodale Teilchengrößenverteilung. Möglich ist auch die Zugabe der Polymersaatdispersion zu mehreren verschiedenen Zeitpunkten. Zu den unterschiedlichen Zugabezeitpunkten kann dabei eine Polymersaatdispersion unterschiedlicher mittlerer Teilchengrößen eingesetzt werden. Das Ergebnis sind unterschiedlich gestaltete Teilchengrößeverteilungen.

Das erhaltene Bindemittel enthält die Polymersaat A) in Mengen von 1 bis 49 Gew.-%, bezogen auf den Feststoffgehalt, vorzugsweise 1 bis 19 Gew.-%, besonders bevorzugt 3 bis 15 Gew.-%. Die Monomeren (B) sind in Mengen von 51 bis 99 Gew.-%, bezogen auf den Feststoffgehalt, bevorzugt 81 bis 99 Gew.-%, besonders bevorzugt 85 bis 97 Gew.-% enthalten, wobei sich die Mengen an A) und B) zu Hundert addieren.

Die Verwendung des Bindemittels aus A) und B) in Papierstreichmassen erfolgt vorzugsweise in Form wäßriger Dispersionen.

Die wäßrigen Polymerisationsdispersionen des Bindemittels werden in der Regel mit Gesamtfeststoffgehalten von 15 bis 75 Gew.-%, bevorzugt von 40 bis 60 Gew.-% hergestellt.

Die Dispersion können übliche Hilfsstoffe wie Ätzkali, Ammoniak oder Ethanolamin als Neutralisationsmittel, Siliconverbindungen als Entschäumer, Biozide sowie Siliconöle oder Wachse zur Absenkung der Klebrigkeit enthalten.

Die Papierstreichmassen enthalten die Bindemittel auf Basis von A) und B), vorzugsweise in Mengen von 1 bis 20, insbesondere 5 bis 15 Gew.-%, bezogen auf den Pigmentgehalt der Papierstreichmassen.

Üblicherweise stellen Pigmente die Hauptkomponente der Papierstreichmassen dar. Häufig verwendete Pigmente sind beispielsweise Bariumsulfat, Calciumcarbonat, Calciumsulfoaluminat, Kaolin, Talkum, Titandioxid, Zinkoxid, Kreide oder Streichclay.

Weiterhin können die Papierstreichmassen übliche Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentmenge, enthalten sind.

Außerdem können die Papierstreichmassen sogenannte "Co-Binder" enthalten. Als natürliche Cobinder seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder, z.B. auf Vinylacetat- oder Acrylatbasis, verwendet werden.

Diese können in Mengen von 0,1 bis 10 Gew.-%, bezogen auf die Pigmentmenge enthalten sein.

Die Papierstreichmassen können nach üblichen Verfahren wie auf die zu beschichtenden Papiere aufgebracht werden (vgl. Ullmann's Encyklopädie der Technischen Chemie, 4. Auflage, Bd. 17, S. 603ff).

Die so beschichteten Papiere weisen beim anschließenden Bedruckprozeß eine gute gleichmäßige Bedruckbarkeit, also sehr geringe "Mottling-Neigung" auf.

Beispiel 1

(Vergleichsbeispiel)

Herstellung einer Dispersion unter Verwendung einer Polymersaat A) in der Vorlage

Herstellung der Polymersaat

Vorlage:

| | |
|---|---|
| 280,0 g | vollentionisiertes Wasser |
| 63,0 g | Natriumlaurylsulfat, 10 %ig in Wasser |
| 10,0 g | $C_{12}$-Alkyldiphenyletherdisulfonat-Na-Salz, 45 %ig in Wasser |
| 86,0 g | Zulauf 1 |
| 6,3 g | Zulauf 2 |

Zulauf 1

| | |
|---|---|
| 445,0 g | vollentionisiertes Wasser |
| 144,0 g | Natriumlaurylsulfat, 10 %ig in Wasser |
| 100,0 g | $C_{12}$-Alkyldiphenyletherdisulfonat-Na-Salz, 45 %ig in Wasser |
| 31,0 g | Acrylsäure |
| 900,0 g | n-Butylacrylat |
| 100,0 g | Styrol |

Zulauf 2:

| | |
|---|---|
| 120,0 g | vollentionisiertes Wasser |
| 5,0 g | Natriumpersulfat |

Die Vorlauge wurde in einem gerührten Kolben auf 85°C aufgeheizt und 15 Minuten anpolymerisiert. Anschließend wurde bei 85°C die restliche Menge von Zulauf 1 während einer Zeitspanne von 2 Stunden und gleichzeitig mit Zulauf 1 beginnend Zulauf 2 während einer Zeitspanne von 2,5 Stunden zudosiert. Das Reaktionsgemisch wurde anschließend noch eine Stunde bei 85°C nachgerührt. Man erhielt eine Dispersion mit einem Feststoffgehalt von 49,5 %, die zahlenmittlere Teilchengröße (Malvern Autosizer) betrug 71 nm, der LD-Wert betrug 97 %.

Der LD-Wert als Maß für die Teilchengröße gibt die Trübung einer Dispersion mit einem Feststoffgehalt von 0,01 Gew.-% relativ zu destilliertem Wasser bei einer Schichtdicke von 2,5 cm und bei Raumtemperatur an

$$LD = \frac{\text{Intensität}_{\text{Disp.}} \times 100}{\text{Intensität}_{\text{Wasser}}}$$

Herstellung des Bindemittels

Vorlage:

| | |
|---|---|
| 6000,0 g | vollentionisiertes Wasser |
| 16,7 g | $C_{12}$-Alkyldiphenyletherdisulfonat-Na-Salz, 45 %ig in Wasser |
| 3030,0 g | Dispersion der Polymersaat, wie vorstehend erhalten |
| 1107,0 g | Zulauf 1 |
| 212,0 g | Zulauf 2 |

Zulauf 1

| | |
|---|---|
| 5124,0 g | vollentionisiertes Wasser |
| 5100,0 g | Butadien |
| 9375,0 g | Styrol |
| 541,0 g | Acrylsäure |
| 120,0 g | t-Dodecylmercaptan |
| 133,3 g | $C_{12}$-Alkyldiphenyletherdisulfonat-Na-Salz, 45 %ig in Wasser |
| 250,0 g | Natriumlaurylsulfat, 15 %ig in Wasser |

Zulauf 2

| | |
|---|---|
| 120,0 g | Natriumpersulfat |
| 2000,0 g | vollentionisiertes Wasser |

Die Vorlage wurde in einem gerührten Druckgefäß auf 85°C erhitzt und 15 Minuten anpolymerisiert. Anschließend wurde bei 85°C die restliche Menge von Zulauf 1 während einer Zeitspanne von 4,5 Stunden und gleichzeitig mit Zulauf 1 beginnend Zulauf 2 während einer Zeitspanne von 4,5 Stunden zudosiert. Das Reaktionsgemisch wurde anschließend noch eine Stunde bei 85°C nachgerührt. Man erhielt eine Dispersion mit einem Feststoffgehalt von 50,6 %, die Teilchengröße (Malvern Autosizer) betrug 156 nm, der LD-Wert betrug 54 %. Die Glastemperatur betrug 25°C, berechnet nach Fox.

Beispiel 2 (erfindungsgemäß)

Herstellung einer Dispersion unter Verwendung einer Polymersaat im Nachschuß

Herstellung der Polymersaat

Vorlage:

| | |
|---|---|
| 210,0 g | vollentionisiertes Wasser |
| 10,5 g | Natriumlaurylsulfat, 10 %ig in Wasser |
| 1,7 g | $C_{12}$-Alkyldiphenyletherdisulfonat-Na-Salz, 45 %ig in Wasser |
| 61,1 g | Zulauf 1 |
| 5,2 g | Zulauf 2 |

Zulauf 1

| | |
|---|---|
| 430,0 g | vollentionisiertes Wasser |
| 12,0 g | Natriumlaurylsulfat, 10 %ig in Wasser |
| 5,0 g | $C_{12}$-Alkyldiphenyletherdisulfonat-Na-Salz, 45 %ig in Wasser |
| 23,0 g | Acrylsäure |
| 675,0 g | n-Butylacrylat |
| 75,0 g | Styrol |

Zulauf 2:

| | |
|---|---|
| 100,0 g | vollentionisiertes Wasser |
| 3,75 g | Natriumpersulfat |

Die Vorlage wurde in einem gerührten Kolben auf 85°C aufgeheizt und 15 Minuten anpolymerisiert. Anschließend wurde bei 85°C die restliche Menge von Zulauf 1 während einer Zeitspanne von 2 Stunden und gleichzeitig mit Zulauf 1 beginnend Zulauf 2 während einer Zeitspanne von 2,5 Stunden zudosiert. Das Reaktionsgemisch wurde anschließend noch eine Stunde bei 85°C nachgerührt. Man erhielt eine Dispersion mit einem Feststoffgehalt von 49,4 %, die Teilchengröße (Malvern Autosizer) betrug 120 nm, der LD-Wert betrug 88 %.

Herstellung des Bindemittels

Vorlage:

| | |
|---|---|
| 5820,0 g | vollentionisiertes Wasser |
| 98,0 g | Natriumlaurylsulfat, 10 %ig in Wasser |
| 1164,0 g | Zulauf 1 |
| 315,0 g | Zulauf 2 |

Zulauf 1

| | |
|---|---|
| 5124,0 g | vollentionisiertes Wasser |
| 5100,0 g | Butadien |
| 9375,0 g | Styrol |
| 541,0 g | Acrylsäure |
| 120,0 g | t-Dodecylmercaptan |
| 133,3 g | $C_{12}$-Alkyldiphenyletherdisulfonat-Na-Salz, 45 %ig in Wasser |
| 250,0 g | Natriumlaurylsulfat, 15 %ig in Wasser |

Zulauf 2:

| | |
|---|---|
| 120,0 g | Natriumpersulfat |
| 2000,0 g | vollentionisiertes Wasser |

Zulauf 3:

| | |
|---|---|
| 2884.0 g | Dispersion der Polymersaat, wie voranstehend erhalten |

Die Vorlage wurde in einem gerührten Druckgefäß auf 85°C erhitzt und 15 Minuten anpolymerisiert. Anschließend wurde bei 85°C die restliche Menge von Zulauf 1 während einer Zeitspanne von 4,5 Stunden und gleichzeitig mit Zulauf 1 beginnend Zulauf 2 während einer Zeitspanne von 4,5 Stunden zudosiert. 1,5 Stunden nach Beginn der Dosierung der Restmenge Zulauf 1 und Zulauf 2 wurde Zulauf 3 innerhalb von 3 Minuten als Schuß zugegeben. Das Reaktionsgemisch wurde nach beendeter Zugabe von Zulauf 1 und Zulauf 2 noch eine Stunde bei 85°C nachgerührt. Man erhielt eine Dispersion mit einem Feststoffgehalt von 50,3 %, die Teilchengröße (Malvern Autosizer) betrug 50 %. Die Glastemperatur betrug 24°C.

Beispiel 3 (Vergleichsbeispiel)

Herstellung einer Polymerdispersion auf Basis Butadien ohne Verwendung einer Polymersaat

Vorlage:

| | |
|---|---|
| 19,4 kg | vollentionisiertes Wasser |
| 0,25 kg | Natriumlaurylsulfat, 10 %ig in Wasser |

(fortgesetzt)

| | |
|---|---|
| 3,88 kg | Zulauf 1 |
| 1,05 kg | Zulauf 2 |

Zulauf 1

| | |
|---|---|
| 24,25 kg | vollentionisiertes Wasser |
| 17,5 kg | Butadien |
| 31,0 kg | Styrol |
| 1,5 kg | Acrylsäure |
| 0,5 kg | t-Dodecylmercaptan |
| 2,75 kg | Natriumlaurylsulfat, 15 %ig in Wasser |

Zulauf 2:

| | |
|---|---|
| 0,4 kg | Natriumpersulfat |
| 4,85 kg | vollentionisiertes Wasser |

Die Vorlage wurde auf 85°C erhitzt und 15 Minuten anpolymerisiert. Anschließend wurde der restliche Zulauf 1 während 5 Stunden und gleichzeitig mit Zulauf 1 beginnend Zulauf 2 während 5,5 Stunden zugegeben. Anschließend wurde 2 Stunden bei 85°C nachpolymerisiert. Man erhielt eine Dispersion mit Teilchengröße (Malvern Autosizer) 170 nm und 50 % Feststoffgehalt. Die Glastemperatur betrug 17°C.

Anwendungstechnische Beispiele

Die in den Beispielen dargestellten Dispersionen wurden als Bindemittel in einer Papierstreichmasse der folgenden Zusammensetzung verwendet (Teile sind Gewichtsteile):

| | |
|---|---|
| 60 Tle. | feinteilige Kreide |
| 40 Tle. | feinteiliger Clay |
| 1 Tle. | Carboxymethylcellulose |
| 0,6 Tle. | eines Natriumsalzes einer Polyacrylsäure mit einem Molekulargewicht von 4000 (Polysalz BASF) |
| 12 Tle. | Bindemitteldispersion |

(Feststoffgehalt: 66 Gew.-%, pH-Wert: 8,5 bis 9, (eingestellt mit der NaOH).

Als Rohpapier wurde ein holzfreies Streichrohpapier mit einem Flächengewicht von 70 g/$m^2$ verwendet. Der Auftrag der Streichmasse erfolgte beidseitig mit jeweils 13 g/$m^2$ auf einer Technikumsstreichmaschine (Auftragsverfahren: Walze, Dosierverfahren: Blade) mit einer Geschwindigkeit von 1000 M/min. Die Papierbahn wurde mittels einer IR-Trockeneinheit und Lufttrocknung auf einer Papierfeuchte von 5,5 % eingestellt.

Die maximale Bahntemperatur betrug 100°C.

Die Papierbahn wurde durch einmaligen Durchlauf durch einen Superkalander geglättet. Dabei betrug der Liniendruck 250 kN/m, die Bahngeschwindigkeit 300 m/min und die Temperatur 80°C.

Zur Beurteilung der Bedruckbarkeit wurden Mottle-Scan-Werte mit Hilfe eines "Tobias-Testers" ermittelt. (Die Meßmethode ist beschrieben in: Philipp E. Tobias et al., Tappi Journal, Vol. 72, Nr. 5, Mai 1989.) Die Mottle-Scan-Werte wurden an einer Farbfläche, die mit einer Farbdeckung von 50 % der maximalen Farbdeckung der Farbe Cyan auf einer 4-Farb-Offsetdruckmaschine im Bogenoffsetdruckverfahren gedruckt wurde, bestimmt.

| Bindemittel | Mottling-Scan-Wert |
|---|---|
| Beispiel 1 (Vergleich) | 425 |
| Beispiel 2 (Erfindung) | 358 |
| Beispiel 3 (Vergleich) | 623 |

Ein niedriger Mottling-Scan-Wert steht dabei für gute Bedruckbarkeit, also geringes Mottling.

**Patentansprüche**

1. Verwendung von mit Papierstreichmassen beschichteten Papieren im Offsetdruck, dadurch gekennzeichnet, daß die Papierstreichmasse als Bindemittel ein in Saatfahrweise hergestelltes Polymer aus

| | |
|---|---|
| 1 bis 49 Gew.-% | einer Polymersaat A) mit einer Glasübergangstemperatur von -80 bis 0°C auf Basis von Estern der Acrylsäure oder (Meth)acrylsäure und |
| 51 bis 99 Gew.-% | ethylenisch ungesättigter Monomerer B), bei denen es sich zu 10 bis 100 Gew.-%, bezogen auf B, um Butadien handelt, |

wobei die Polymersaat A während der Polymerisation der ethylenisch ungesättigten Monomeren zugesetzt wird, enthält.

2. Verwendung gemäß Anspruch 1, dadurch gekennzeichnet, daß Polymersaat A) ein Polymerisat aus

($a_1$) 50 bis 100 Gew.-% eines Esters der Acrylsäure oder der Methacrylsäure mit $C_4$-$C_{12}$-Alkanolen oder Mischungen solcher Ester,

($a_2$) 0 bis 50 Gew.-% eines Vinylaromaten,

($a_3$) 0 bis 15 Gew.-% an weiteren olefinisch ungesättigten Monomeren

ist.

3. Verwendung gemäß Anspruch 1 oder 2, dadurch gekennzeichnet, daß Polymerisat A) ein Polymerisat aus

($a_1$) 80 bis 99 Gew.-% eines Esters der Acrylsäure oder der Methacrylsäure mit $C_4$-$C_{12}$-Alkanolen oder Gemischen solcher Ester,

($a_2$) 0 bis 20 Gew.-% Styrol oder eines Styrolderivats oder Mischungen davon, und

($a_3$) 1 bis 5 Gew.-% Acrylsäure oder Methacrylsäure oder deren Mischungen

ist.

**Claims**

1. Use of paper coated with a paper coating slip in offset printing, wherein the paper coating slip contains as a binder a polymer prepared by the seed procedure and comprising

| | |
|---|---|
| from 1 to 49 % by weight | of a polymer seed A) having a glass transition temperature of from -80 to 0°C and based on esters of acrylic acid or methacrylic acid and |
| from 51 to 99 % by weight | of ethylenically unsaturated monomers B), from 10 to 100 % by weight, based on B, of which monomers are butadiene, |

the polymer seed A being added during the polymerization of the ethylenically unsaturated monomers.

2. Use as claimed in claim 1, wherein polymer seed A) is a polymer of

($a_1$) from 50 to 100 % by weight of an ester of acrylic acid or of methacrylic acid with a $C_4$-$C_{12}$-alkanol or a mixture of such esters,

($a_2$) from 0 to 50 % by weight of a vinylaromatic, and

($a_3$) from 0 to 15 % by weight of further olefinically unsaturated monomers.

3. Use as claimed in claim 1 or 2, wherein polymer seed A) is a polymer of

($a_1$) from 80 to 99 % by weight of an ester of acrylic acid or of methacrylic acid with a $C_4$-$C_{12}$-alkanol or a mixture of such esters,

($a_2$) from 0 to 20 % by weight of styrene or of a styrene derivative or a mixture thereof, and

($a_3$) from 1 to 5 % by weight of acrylic acid or methacrylic acid or a mixture thereof.

**Revendications**

1. Utilisation pour l'impression offset de papiers enduits de masses de couchage, caractérisée en ce que la masse de couchage contient en tant que liant un polymère, préparé par un procédé d'ensemencement, à base de

| | |
|---|---|
| 1 à 49% en poids | d'un germe polymère A) ayant une température de transition vitreuse de -80 à 0°C à base d'esters d'acide acrylique ou d'acide (méth)acrylique et |
| 51 à 99% en poids | de monomères B) à insaturation éthylénique, parmi lesquels on trouve de 10 à 100% en poids de butadiène, par rapport à B, |

où le germe polymère A est ajouté aux monomères à insaturation éthylénique pendant la polymérisation.

2. Utilisation selon la revendication 1, caractérisée en ce que le germe polymère A) est un polymère à base de

($a_1$) 50 à 100% en poids d'un ester d'acide acrylique ou d'acide méthacrylique et d'alcanols en $C_4$-$C_{12}$ ou de mélanges de tels esters,
($a_2$) 0 à 50% en poids d'un composé vinylaromatique,
($a_3$) 0 à 15% en poids d'autres monomères à insaturation oléfinique.

3. Utilisation selon la revendication 1 ou 2, caractérisée en ce que le polymère A) est un polymère à base de

($a_1$) 80 à 99% en poids d'un ester d'acide acrylique ou d'acide méthacrylique et d'alcanols en $C_4$-$C_{12}$ ou de mélanges de tels esters,
($a_2$) 0 à 20% en poids de styrène ou d'un dérivé du styrène ou de mélanges de ceux-ci, et
($a_3$) 1 à 5% en poids d'acide acrylique ou d'acide méthacrylique ou de leurs mélanges.